# EUROPÄISCHE PATENTSCHRIFT

(11) **EP 1 205 992 B1**
(45) Veröffentlichungstag und Bekanntmachung des Hinweises auf die Patenterteilung: **09.09.2009**
(21) Anmeldenummer: 01125299.6
(22) Anmeldetag: 25.10.2001
(51) Int. Cl.: H01M 8/04, H01M 8/06

(54) **Brennstoffzellensystem und Verfahren zum Start eines Brennstoffzellensystems**
Fuel cell system and method for starting a fuel cell system
Système de pile à combustible et méthode de démarrage d'un système de pile à combustible

(30) Priorität: 08.11.2000 DE 10055245
(43) Veröffentlichungstag der Anmeldung: 15.05.2002
(73) Patentinhaber: NuCellSys GmbH, 73230 Kirchheim/Teck-Nabern (DE)
(72) Erfinder: Birk, Wolfram, 73240 Wendlingen (DE)
(74) Vertreter: JENSEN & SON

(56) Entgegenhaltungen:
- US-A- 4 326 013
- PATENT ABSTRACTS OF JAPAN Bd. 1998, Nr. 06, 30. April 1998 (1998-04-30) & JP 10 029802 A (ASAHI CHEM IND CO LTD; NOGUCHI KENKYUSHO), 3. Februar 1998 (1998-02-03)
- PATENT ABSTRACTS OF JAPAN Bd. 1996, Nr. 09, 30. September 1996 (1996-09-30) & JP 08 133701 A (AQUEOUS RES:KK; AISIN AW CO LTD), 28. Mai 1996 (1996-05-28)
- PATENT ABSTRACTS OF JAPAN Bd. 017, Nr. 115 (E-1330), 10. März 1993 (1993-03-10) & JP 04 296460 A (TOKYO GAS CO LTD; others: 03), 20. Oktober 1992 (1992-10-20)

## Beschreibung

Die vorliegende Erfindung betrifft ein Brennstoffzellensystem nach dem Oberbegriff des Patentanspruchs 1 sowie ein Verfahren zum Start eines Brennstoffzellensystems nach dem Oberbegriff des Patentanspruchs 7.

Brennstoffzellensysteme weisen beispielsweise eine Gaserzeugungseinrichtung auf, welche den zum Betrieb der Brennstoffzellen notwendigen Wasserstoff als Brennstoff liefern. Hierzu wird in einem Reformer beispielsweise Methanol reformiert, wobei gemäß folgender Reaktion Kohlendioxid und Wasserstoff entstehen:

CH₃OH+H₂O→CO₂+3H₂

Durch Zufuhr von Luft/Sauerstoff kann dieser Prozeß durch die exotherme Umsetzung des Kohlenwasserstoffs unterstützt werden. Ein wasserstoffreiches Gas wird dabei durch partielle Oxidation des Kohlenwasserstoffes erzeugt.

Bei dieser Umsetzung von Methanol entsteht in Zwischenschritten auch Kohlenmonoxid, so daß das Reformat im wesentlichen Wasserstoff, Kohlendioxid, Wasser(dampf) und Kohlenmonoxid enthält. Die bei ca. 1% liegende CO-Konzentration muß zur Verwendung des Reformats in einer Brennstoffzelle auf unter 40 ppm abgesenkt werden, da Kohlenmonoxid den Wirkungsgrad von Polymermembran-Brennstoffzellen drastisch senkt.

Zur Entfernung von CO in wasserstoffreicher Atmosphäre können die Wasserstoff-Shiftreaktion und die selektive Oxidation von CO in Festbettreaktoren an entsprechenden selektiven Katalysatoren vorgenommen werden. Durch derartige Maßnahmen ist es möglich, den CO-Anteil des Reformats auf unter 40 ppm zu reduzieren.

Derartige Verfahren sind beispielsweise aus der US-5,271,916, der DE 43 349 83 A1 oder der DE 195 44 895 C1 bekannt.

Die zahlreichen bekannten Vorrichtungen und Verfahren betreffen den Betrieb der Systeme, wenn diese ihre Betriebstemperatur erreicht haben. Beim Start eines Brennstoffzellensystems ist es notwendig, die CO-Oxidationsstufen möglichst schnell auf Betriebstemperatur zu bringen, um von Anfang an der Brennstoffzelle ein Reformat mit geringen CO-Konzentrationen zur Verfügung zu stellen.

Um dieses Problem zu lösen, wurde in der JP 0010029802A (Anmeldenummer: 1996,202803) vorgeschlagen, den Katalysator der selektiven Oxidationsstufe mit einem im wesentlichen aus Wasserstoff bestehenden Gas bei einer Temperatur oberhalb 50° vorzubehandeln, wobei das Gas in dem Katalysator ohne Zugabe von Luft reagiert. Im gleichen Zusammenhang wurde in der JP 0008133701 A (Anmeldennummer: 1994,288612) vorgeschlagen, für den Kaltstart oder nach Betriebsunterbrechungen dem selektiven Oxidationsreaktor Oxidationsmittel (Luft) immer dann im Überschuß zuzuführen, wenn die Temperatur unterhalb der Katalysatorbetriebstemperatur liegt. Hierdurch wird zusätzlich zum Kohlenmonoxid auch Wasserstoff oxidiert, wodurch die Temperatur aufgrund der exothermen Reaktion schnell ansteigt. Nach Erreichen der Aktivierungstemperatur des Katalysators wird die Zufuhr des Oxidationsmittels derart gesteuert, daß eine optimale Umsetzung des Kohlenmonoxids erfolgt.

Aus der JP 04296460 A ist es bekannt, beim Betrieb einer Brennstoffzelle von einem vorangegangenen Betrieb noch erwärmtes Kühlwasser zu verwenden, um eine Reformatgastemperatur zu erhöhen.

Aus der US 4,326,013 ist ein System bekannt, bei dem Wasserstoff über eine Elektrolysezelle bereitgestellt und in einem Metallhydridspeicher gespeichert wird. Mit diesem Wasserstoff aus dem Metallhydridspeicher wird eine Brennstoffzelle, insbesondere die Brennstoffzelle eines Fahrzeugs, gespeist. Da bei der Freisetzung von Wasserstoff aus dem Metallhydrid einerseits Wärmeenergie benötigt wird, um die Freisetzung zu realisieren, andererseits bei der Bindung des Wasserstoffs an das Metall jedoch Wärme frei wird, wird diese Wärme in einem isolierten Wasserkreislauf zwischengespeichert. Die Wärme wird also beim Einlagern des Wasserstoffs in das Metall (der Hydridbildung) gespeichert und zur Erwärmung des Metallhydrids bei der endothermen Abgabe des Wasserstoffs später wieder verwendet.

Aufgabe der vorliegenden Erfindung ist es, beim Kaltstart und nach Betriebsunterbrechungen eine Verfügbarkeit eines mittels eines Brennstoffzellensystems angetriebenen Kraftfahrzeugs zu gewährleisten.

Diese Aufgabe wird gelöst durch ein Brennstoffzellensystem mit den Merkmalen des Patentanspruchs 1 sowie ein Verfahren zum Start eines Brennstoffzellensystems mit den Merkmalen des Patentanspruchs 7.

Erfindungsgemäß ist zur Aufwärmung der Komponenten eines Brennstoffzellensystems (Gaserzeugungssystem, Brennstoffzelle) der Kühlwasserstrom der Brennstoffzelle verwendbar. Dabei ist ein Brenner oder ein Durchlauferhitzer zum selektiven Erhitzen des Kühlwassers vorgesehen. Mit dieser Maßnahme kann eine gewünschte Kühlwassertemperatur über längere Zeiten aufrechterhalten werden.

Ferner hat das Kühlwasser des Kühlwassersystems stromabwärts der Brennstoffzellen eine Temperatur von ca. 80 °C. Durch Speicherung dieses Wassers in einer Isoliereinrichtung bzw. einem wärmeisolierten Behälter ist es möglich, diese Wassertemperatur auch bei stehendem Fahrzeug über längere Zeiten aufrechtzuerhalten, so daß durch Beaufschlagung der Komponenten des Brennstoffzellensystems des Fahrzeugs mittels des noch warmen Kühlwassers eine gezielte Erwärmung der Komponenten möglich ist, wodurch eine Betriebsbereitschaft des Brennstoffzellensystems bzw. des Fahrzeugs sehr schnell erreicht werden kann.

Gemäß einer bevorzugten Ausführungsform des erfindungsgemäßen Brennstoffzellensystems ist innerhalb der Isoliereinrichtung ein Latentspeicher ausgebildet. Ein Latentspeicher kann beispielsweise aus einem geschlossenen Körper bestehen, in dem sich ein geeignetes Latentspeichermedium befindet. Der Latentspeicher gibt seine gespeicherte Wärmeenergie über den Körper an das Wasser ab, wobei das Latentspeichermedium beispielsweise erstarrt. Geschmolzen wird das Medium beim Erhitzen des Wassers, sobald die Wassertemperatur die Schmelztemperatur des Latentspeichermediums erreicht hat. Mit dieser Maßnahme ist die Aufrechterhaltung einer einen Start des Brennstoffzellensystems fördernden Kühlwassertemperatur über sehr lange Zeiten möglich.

Gemäß einer besonders bevorzugten Ausführungsform des erfindungsgemäßen Brennstoffzellensystems, für welche gesondert um Schutz nachgesucht wird, sind Mittel zur selektiven Wärmebeaufschlagung vorbestimmter Bereiche des Brennstoffzellensystems vorgesehen. Speziell bei dem Kaltstart eines Gaserzeugungssystems für Brennstoffzellen müssen die katalytischen Komponenten, wie beispielsweise Reformer, CO-Oxidator usw., möglichst schnell auf eine Betriebstemperatur, z. B. eine Temperatur größer als 20°C, gebracht werden, damit die jeweiligen Reaktionen schneller ablaufen. Insbesondere bei exothermen Stufen wie CO-Oxidatoren erweist es sich als wirksam, einen kleinen Bereich der katalytisch aktiven Zone vorzuwärmen. Wenn diese Bereiche katalytisch gestartet sind, entsteht hier durch die Reaktion thermische Energie, so daß die vollständige katalytische Stufe entsprechend schnell starten kann.

Zweckmäßigerweise sind die Mittel zur selektiven Beaufschlagung als die vorbestimmten Bereiche durchziehende Kanäle ausgebildet. Es ist möglich, die jeweils zu erwärmenden Komponenten mit feinen Kühlwasserkanälen zu durchziehen, vergleichbar beispielsweise mit den Kühlwasserkanälen eines Verbrennungsmotors. Durch diese Maßnahme können die Komponenten gezielt an den Stellen erwärmt werden, an denen eine katalytische Reaktion starten soll.

Zweckmäßigerweise ist die Einrichtung zur Versorgung der Brennstoffzelle mit wasserstoffhaltigem Gas als Gaserzeugungseinheit ausgebildet. Die katalytischen Komponenten eines derartigen Gaserzeugungssystems, beispielsweise Reformer oder CO-Oxidator, können mit den erfindungsgemäß vorgeschlagenen Maßnahmen sehr schnell auf eine gewünschte Betriebstemperatur erwärmt werden.

Zweckmäßigerweise ist wenigstens ein katalytisches Element der Gaserzeugungseinheit innerhalb eines rohrförmigen Gehäuses angeordnet. Hierdurch kann ein Teil oder die gesamte Rohrwand von feinen Kanälen durchzogen sein, durch welche das warme Kühlwasser strömen kann. Die Herstellung eines derartigen Rohres ist beispielsweise als Strangguss-Profil realisierbar.

Die Erfindung wird nun anhand der beigefügten Zeichnung weiter erläutert. In dieser zeigt
- Fig. 1: ein stark vereinfachtes Blockschaltbild zur Darstellung wesentlicher Komponenten eines Brennstoffzellensystems,
- Fig. 2: eine Schnittansicht einer ersten bevorzugten Ausführungsform einer katalytischen Komponente eines erfindungsgemäßen Brennstoffzellensystems,
- Fig. 3: eine um 90° gedrehte Ansicht der Ausführungsform der Fig. 2,
- Fig. 4: eine Schnittansicht einer zweiten bevorzugten Ausführungsform einer katalytischen Komponente eines erfindungsgemäßen Brennstoffzellensystems, und
- Fig. 5: eine dritte bevorzugte Ausführungsform einer katalytischen Komponente eines erfindungsgemäßen Brennstoffzellensystems.

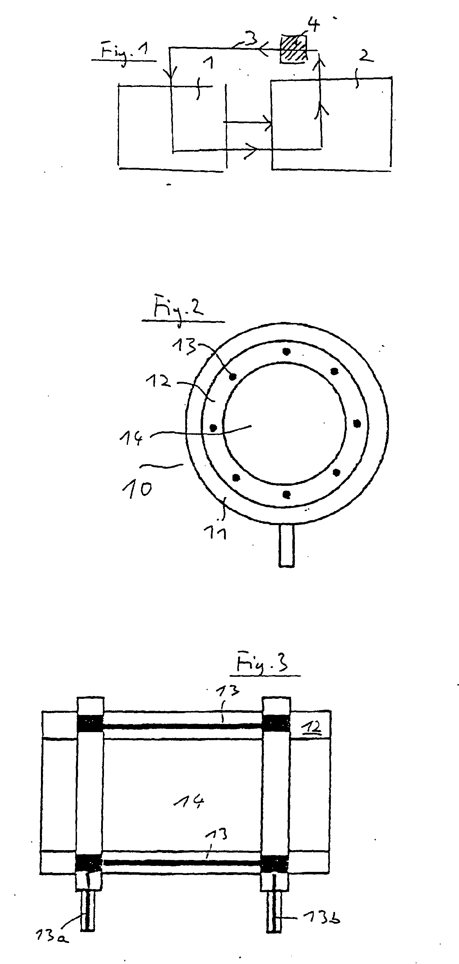

In Fig. 1 sind die wesentlichen Komponenten eines Brennstoffzellensystems dargestellt. Mit 1 ist hierbei eine Einrichtung zur Versorgung von Brennstoffzellen 2 mit Wasserstoff oder einem wasserstoffhaltigen Gas bezeichnet. Die Einrichtung 1 kann beispielsweise ein Speicher zur Speicherung reinen Wasserstoffs sein. Im folgenden wird jedoch beispielhaft davon ausgegangen, daß es sich bei der Einrichtung 1 um eine Gaserzeugungseinheit handelt, welche auf der Grundlage einer Reformierung beispielsweise von Methanol ein wasserstoffhaltiges Gas zur Verfügung stellt.

Die Gaserzeugungseinheit 1 weist eine Anzahl von (in Fig. 1 nicht dargestellten) katalytischen Komponenten zur Durchführung der gewünschten Reformierung auf. Als Beispiele seien genannt ein Reformer oder ein CO-Oxidator.

Die Brennstoffzellen sind üblicherweise mit einem Kühlkreislauf ausgebildet, mittels dessen die Brennstoffzellen mittels Kühlmittel bzw. Kühlwasser beaufschlagbar sind. Als Kühlwasser wird hierbei insbesondere Wasser mit einem Glykolzusatz verstanden, welches auch bei Umgebungstemperaturen unter 0°C einsetzbar ist.

In Fig. 1 erkennt man, daß der mit 3 bezeichnete Kühlkreislauf sich auch durch das Gaserzeugungssystem 1 erstreckt. Der Kühlkreislauf 3 weist hierbei einen isolierten Behälter bzw. Isolierbehälter 4 auf, in welchem aus den Brennstoffzellen 2 austretendes, relativ warmes Kühlwasser wärmeisoliert gespeichert werden kann. Bei einem Betrieb des Brennstoffzellensystems hat das Kühlwasser nach dem Austritt aus einer Brennstoffzelle eine Temperatur von ca. 80°C. Das so erwärmte und in dem Isolierbehälter 4 gespeicherte Kühlwasser dient zur Beaufschlagung selektiver Komponenten des Gaserzeugungssystems 1 oder auch selektiver Bereiche der Brennstoffzellen 2 im Falle eines Kaltstarts.

Es sei darauf hingewiesen, daß der Kühlkreislauf 3 tatsächlich wesentlich komplexer ausfällt als in der Fig. 1 dargestellt ist. Es kann beispielsweise vorgesehen sein, während des Normalbetriebes des Brennstoffzellensystems auf eine Beaufschlagung des Gaserzeugungssystems 1 mit Kühlwasser zu verzichten, wobei hier beispielsweise entsprechende Sperr- oder Umleitungseinrichtungen für den Kühlkreislauf 3 vorgesehen sein können.

Der Isolierbehälter 4 kann zur Aufrechterhaltung einer gewünschten Kühlwassertemperatur mit einem (nicht dargestellten) Brenner oder Durchlauferhitzer oder auch mit einem (nicht dargestellten) Latentwärmespeicher in Wirkverbindung stehen.

Zweckmäßigerweise wird beispielsweise nach einem Kaltstart des Brennstoffzellensystems in dem Isolierbehälter 4 gespeichertes, von einem vorangegangenen Betrieb des Systems noch warmes Wasser über den Kühlkreislauf 3 auf ausgewählte Bereiche der Gaserzeugungseinheit 1 oder der Brennstoffzellen 2 gegeben. Dadurch können beispielsweise katalytische Komponenten der Gaserzeugungseinheit 1 gezielt dort erwärmt werden, wo eine katalytische Reaktion starten soll.

In Fig. 2 ist als katalytische Komponente beispielhaft ein Reformer 10 dargestellt. Dieser Reformer 10 weist in seinem Inneren ein geeignetes katalytisches Material, z. B. eine katalytische Schüttung 14 auf, welche von einer rohrförmigen Ummantelung 12 umgeben ist. Die Ummantelung ihrerseits ist in einem rohrförmigen Gehäuse 11 angeordnet.

Die Ummantelung 12 ist mit feinen Kanälen 13 durchzogen, welche einen Teil des in Fig.1 dargestellten Kühlkreislaufs 3 bilden. Dies bedeutet, daß erwärmtes Kühlwasser zur selektiven Erwärmung der katalytischen Schüttung 14 durch die Kanäle 13 fließen kann.

In Fig. 3 sind ebenfalls die die rohrförmige Ummantelung 12 durchziehenden Kanäle 13 erkennbar. Hier sind ferner für den unteren Kanal 13 Zu- und Ableitungen 13a, 13b dargestellt, welche ebenfalls Teile des Kühlkreislaufs 3 sind.

Es wurde bereits darauf hingewiesen, daß erfindungsgemäß sehr gezielt kleine Bereiche von katalytischen Komponenten zur Gewährleistung eines schnellen Starts einer katalytischen Reaktion erwärmt werden können. Das System der Wärmebeaufschlagung der katalytischen Komponenten mittels Kühlwassers ist von den sonstigen Gasströmungen des Brennstoffzellensystems unabhängig. Durch die hohe Wärmekapazität von Wasser im Vergleich zu Gasen kann die Energie auf sehr kleinem Raum gespeichert werden und ist in dem Isolierbehälter 4 relativ leicht zu isolieren. Das Kühlwasser kann in einfacher Weise (mittels einer nicht dargestellten Pumpe) durch das System gepumpt werden und bietet einen höheren Wärmeübergangskoeffizienten im Vergleich zu strömenden Gasen. So ist es erfindungsgemäß möglich, die im Kühlwasser gespeicherte Abwärme der Brennstoffzellen zu nutzen, wobei diese Abwärme bereits nach kurzen Betriebszeiten des Kraftfahrzeugs zur Verfügung steht.

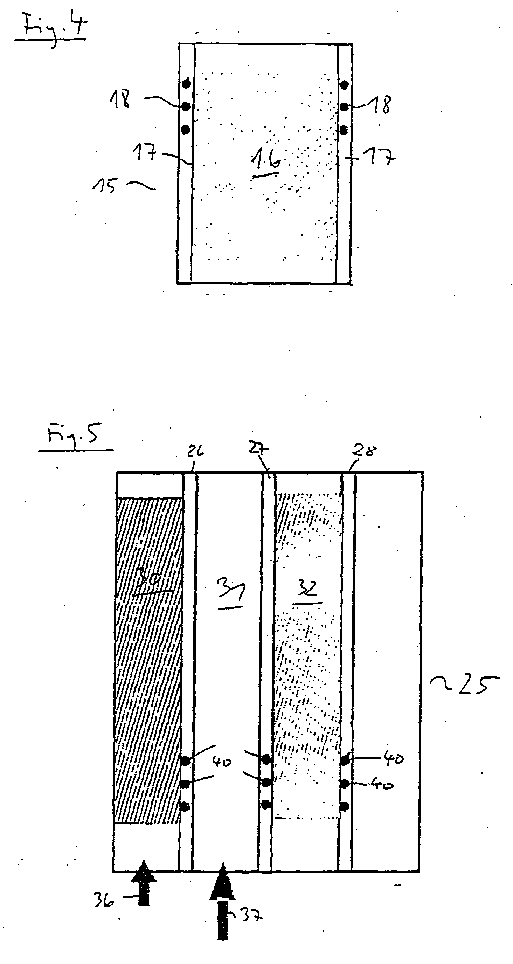

In Fig. 4 ist eine katalytische Komponente, die Teil des Gaserzeugungssystems 1 ist, als Plattenwärmetauscher ausgebildet. Der Plattenwärmetauscher ist insgesamt mit Bezugszeichen 15 bezeichnet. In Fig. 4 sind lediglich die Endplatten 17 des Plattenwärmetauschers 15 dargestellt, auf eine Darstellung von gegebenenfalls vorgesehenen Zwischenplatten ist hier verzichtet. Der katalytisch aktive Bereich zwischen den Endplatten 17 ist mit 16 bezeichnet. Man erkennt, daß die Endplatten 17 von Kühlwasserkanälen 18 durchzogen sind, welche in analoger Weise zu Ausführungsform gemäß Figuren 2 und 3 den katalytisch aktiven Bereich bei durchströmendem Kühlwasser relativ schnell auf eine gewünschte Temperatur bringen können. Die Kühlkanäle 18 stellen ebenfalls einen Teil des in Fig. 1 dargestellten Kühlwasserkreislaufs 3 dar.

In Fig. 5 ist ein Plattenpaket eines Wärmetauschers insgesamt mit 25 bezeichnet. In Fig. 5 ist auf eine Darstellung der Endplatten verzichtet, es sind hier lediglich Zwischenplatten bzw. Trennwände zwischen Funktionsbereichen des Plattenwärmetauschers dargestellt. Die Trennwände sind mit 26, 27 und 28 bezeichnet. Es sei beispielhaft angenommen, daß in der Darstellung der Fig. 5 links von der Trennwand 26 ein katalytisch aktiver Bereich 30 ausgebildet ist, der von einem ersten Medienstrom 36 durchströmt wird. Mit 32 ist ein zwischen den Trennwänden 27 und 28 liegender weiterer katalytisch aktiver Bereich bezeichnet, durch welchen der erste Medienstrom 36 ebenfalls fließen kann. Zwischen den katalytischen Bereichen 30, 32 ist ein Bereich 31 vorgesehen, durch welchen ein zweiter Medienstrom (Pfeil 37) strömt. Man erkennt, daß in den Trennwänden 26, 27, 28 Kühlwasserkanäle 40 ausgebildet sind, welche in der oben beschriebenen Weise zu einer beschleunigten Erwärmung beispielsweise der katalytisch aktiven Bereiche 30 bzw. 32 beitragen.

## Patentansprüche

1. Brennstoffzellensystem, insbesondere für ein Kraftfahrzeug, mit wenigstens einer Brennstoffzelle (2) und einer Einrichtung (1) zur Versorgung der wenigstens einen Brennstoffzelle (1) mit Wasserstoff oder einem wasserstoffhaltigem Gas, wobei insbesondere bei einem Start oder Kaltstart des Systems einzelne Komponenten (10, 15, 25) der Einrichtung (1) oder die wenigstens eine Brennstoffzelle (2) mittels in einem Kühlwassersystem (3) enthaltenen Kühlwassers wärmebeaufschlagbar sind, wobei das Kühlwassersystem (3) eine Isoliereinrichtung (4) zur wärmeisolierten Speicherung von Kühlwasser aufweist
**gekennzeichnet durch**
einen Brenner und/oder einen Durchlauferhitzer zum selektiven-Erwärmen des Kühlwassers.

2. Brennstoffzellensystem nach Anspruch 1,
**dadurch gekennzeichnet,**
**daß** die Einrichtung (1) als Gaserzeugungseinheit ausgebildet ist.

3. Brennstoffzellensystem nach Anspruch 1 oder 2,
**dadurch gekennzeichnet,**
**daß** in der Isoliereinrichtung (4) ein Latentspeicher vorgesehen ist.

4. Brennstoffzellensystem nach einem der vorstehenden Ansprüche oder dem Oberbegriff des Anspruchs 1,
**gekennzeichnet durch**
Mittel (13, 18,40) zur selektiven Beaufschlagung vorbestimmter Bereiche, insbesondere Bereiche katalytischer Komponenten, der Einrichtung (1) oder vorbestimmter Bereiche der wenigstens einen Brennstoffzelle (2) mit Kühlwasser.

5. Brennstoffzellensystem nach einem der vorstehenden Ansprüche,
**dadurch gekennzeichnet,**
**daß** die Mittel zur selektiven Beaufschlagung als die vorbestimmten Bereiche bzw. die katalytischen Komponenten durchziehende Kanäle (13, 18, 40) ausgebildet sind.

6. Brennstoffzellensystem nach einem der Ansprüche 2 bis 5,
**dadurch gekennzeichnet,**
**daß** wenigstens eine katalytisches Komponente der Gaserzeugungseinheit (1) innerhalb eines rohrförmigen Gehäuses (12) angeordnet ist.

7. Verfahren zum Start, insbesondere Kaltstart, eines Brennstoffzellensystems mit wenigstens einer Brennstoffzelle (2) und einer Einrichtung (1) zur Versorgung der wenigstens einen Brennstoffzelle (2) mit Wasserstoff oder einem wasserstoffhaltigem Gas, bei welchem katalytisch wirkende Komponenten der Einrichtung (1) oder die wenigstens eine Brennstoffzelle mittels in einem Kühlwasserkreislauf (3) enthaltenen Wassers wärmebeaufschlagt werden, wobei das Kühlwasser vor der Wärmebeaufschlagung der Komponenten der Einrichtung (1) oder der wenigstens einen Brennstoffzelle in einem wärmeisolierten Isolierbehälter (4) gespeichert wird,
**dadurch gekennzeichnet,**
**daß** das Kühlwasser mit einem Brenner und/oder einem Durchlauferhitzer selektiv erwärmt wird.

## Claims

1. Fuel cell system, in particular for a motor vehicle, with at least one fuel cell (2) and a device (1) for supplying the at least one fuel cell (2) with hydrogen or a hydrogenous gas, wherein, in particular during a start or cold start of the system, heat can be applied to individual components (10, 15, 15) of the device (1) or to the at least one fuel cell (2) by means of a coolant contained in a coolant system (3), the coolant system (3) comprising an insulating device (4) for the thermally insulated storage of coolant,
**characterised by**
a burner and/or an instantaneous water heater for the selective heating of the coolant.

2. Fuel cell system according to claim 1,
**characterised in that**
the device (1) is designed as a gas generating unit.

3. Fuel cell system according to claim 1 or 2,
**characterised in that**
a latent storage tank is provided in the insulating device (4).

4. Fuel cell system according to any of the preceding claims or to the preamble of claim 1,
**characterised by**
means (13, 18, 40) for selectively applying coolant to predetermined regions, in particular regions of catalytic components, of the device (1) or to predetermined regions of the at least one fuel cell (2).

5. Fuel cell system according to any of the preceding claims,
**characterised in that**
the means for selectively applying coolant are designed as passages (13, 18, 40) extending through the predetermined regions of the catalytic components.

6. Fuel cell system according to any of claims 2 to 5,
**characterised in that**
at least one catalytic component of the gas generating unit (1) is located within a tubular housing (12).

7. Method for starting, in particular cold-starting, a fuel cell system with at least one fuel cell (2) and a device (1) for supplying the at least one fuel cell (2) with hydrogen or a hydrogenous gas, wherein heat is applied to catalytically acting components of the device (1) or to the at least one fuel cell by means of a coolant contained in a coolant system (3), wherein the coolant is stored in a thermally insulated insulating tank (4) before applying heat to the components of the device (1) or to the at least one fuel cell,
**characterised in that**
the coolant is selectively heated by a burner and/or by an instantaneous water heater.

## Revendications

1. Système de piles à combustible, en particulier pour un véhicule, avec au moins une pile à combustible (2) et un dispositif (1) pour alimenter l'au moins une pile à combustible (1) en hydrogène ou en gaz contenant de l'hydrogène, en particulier au démarrage ou au démarrage à froid du système, chacun des composants (10, 15, 25) du dispositif (1) ou l'au moins une pile à combustible (2) pouvant être alimenté en chaleur au moyen d'eau de refroidissement contenue dans un système (3) d'eau de refroidissement, le système (3) d'eau de refroidissement présentant un dispositif (4) d'isolation pour le stockage thermiquement isolé de l'eau de refroidissement, **caractérisé par** un brûleur et / ou un chauffe-eau à écoulement libre pour le chauffage sélectif de l'eau de refroidissement.

2. Système de piles à combustible selon la revendication 1, **caractérisé en ce que** le dispositif (1) est conçu en tant que dispositif générateur de gaz.

3. Système de piles à combustible selon la revendication 1 ou 2, **caractérisé en ce qu'**un régulateur thermique à changement d'état est prévu dans le dispositif (4) d'isolation.

4. Système de piles à combustible selon l'une quelconque des revendications précédentes ou selon le préambule de la revendication 1, **caractérisé par** des éléments (13, 18, 40) pour l'alimentation sélective de zones prédéterminées, en particulier des zones des composants catalytiques, du dispositif (1) ou des zones prédéterminées d'au moins l'une pile à combustible (2) en eau de refroidissement.

5. Système de piles à combustible selon l'une quelconque des revendications précédentes **caractérisé en ce que** les éléments pour l'alimentation sélective sont formés en tant que zones prédéterminées et / ou en tant que canaux (13, 18, 40) traversant les composants catalytiques.

6. Système de piles à combustible selon l'une quelconque des revendications 2 à 5, **caractérisé en ce qu'**au moins un composant catalytique du dispositif générateur de gaz (1) est disposé à l'intérieur d'un boîtier (12) tubulaire.

7. Procédé pour le démarrage, en particulier pour le démarrage à froid, d'un système de piles à combustible avec au moins une pile à combustible (2) et un dispositif (1) pour alimenter l'au moins une pile (2) à combustible en hydrogène ou en gaz contenant de l'hydrogène selon lequel les composants à action catalytique du dispositif (1) ou l'au moins une pile à combustible sont alimentés en chaleur au moyen d'eau contenue dans un circuit d'eau de refroidissement (3), l'eau de refroidissement étant stockée avant l'alimentation thermique des composants du dispositif (1) ou de l'au moins une pile à combustible dans un réservoir (4) d'isolation isolé thermiquement, **caractérisé en ce que** l'eau de refroidissement est chauffée avec un brûleur et / ou un chauffe-eau à écoulement libre de manière sélective.
